# EUROPEAN PATENT SPECIFICATION

(11) **EP 2 865 200 B1**
(45) Date of publication and mention of the grant of the patent: **18.11.2020**
(21) Application number: 13806695.6
(22) Date of filing: 07.03.2013
(51) Int. Cl.: H04W 4/00, H04W 68/00, H04L 29/14, H04M 3/22, H04W 4/02, H04M 3/42, H04W 24/04, H04W 28/02, H04W 64/00, G01C 21/36, H04L 12/24, H04W 48/18, H04Q 9/00, H04W 4/50, H04W 4/029, H04W 36/02, H04M 1/725

(54) **METHOD AND APPARATUS FOR PROVIDING TRANSITION TO AN ALTERNATE SERVICE BASED ON PERFORMANCE DEGRADATION OF AN INITIAL SERVICE**
VERFAHREN UND VORRICHTUNG ZUR BEREITSTELLUNG EINES ÜBERGANGS ZU EINEM ALTERNATIVEN DIENST JE NACH LEISTUNGSFÄHIGKEITSVERSCHLECHTERUNG EINER ERSTEN DIENSTES
PROCÉDÉ ET APPAREIL POUR PRODUIRE UNE TRANSITION VERS UN SERVICE ALTERNATIF EN CAS DE DÉGRADATION DES PERFORMANCES D'UN SERVICE INITIAL

(30) Priority: 22.06.2012 US 201213531135
(43) Date of publication of application: 29.04.2015
(73) Proprietor: Nokia Technologies Oy, 02610 Espoo (FI)
(72) Inventor: SETLUR, Vidya, Raghavan, Portola Valley, California 94028 (US)
(74) Representative: Ruuskanen, Juha-Pekka
(86) International application number: PCT/FI2013/050247
(87) International publication number: WO 2013/190173

(56) References cited:
- EP-A1- 2 403 186
- JP-A- 2004 171 495
- JP-A- 2004 171 495
- US-A1- 2002 065 922
- US-A1- 2006 285 489
- US-A1- 2007 010 259
- US-A1- 2008 256 557
- US-A1- 2008 256 557
- US-A1- 2009 111 462
- US-A1- 2009 286 526
- US-A1- 2009 309 711
- US-A1- 2010 323 659
- US-A1- 2011 144 911
- US-A1- 2011 144 911
- US-A1- 2011 320 518
- US-B1- 6 591 382

## Description

### BACKGROUND

Service providers and device manufacturers (e.g., wireless, cellular, etc.) are continually challenged to deliver value and convenience to consumers by, for example, providing compelling network services. One of the challenges in providing the network services is maintaining uninterrupted services against obstructive environmental conditions, such as weather conditions, terrain conditions, structural conditions, etc. By way of example, some services (e.g., navigation services, multimedia services, etc.) require data transmission or communication over the wireless network (e.g., GPS, Wi-Fi, cellular, etc.). However, such services can be interrupted or delayed as a result of the obstructive environmental conditions. Consequently, service providers and device manufacturers face significant technical challenges in optimizing user experience with respect to accuracy and responsiveness of these services.

United States patent application publication number US 2006/285489 A1 relates to a method and apparatus for enforcing and improving end-to-end service quality, based on end-to-end service performance characterization of network conditions, for a convergence enabled end-user device during a user session for service.

United States patent application publication number US 2002/065922 A1 relates to a system for effecting a dynamic switch from an existing client-server connection established between a client node and a server node on a data-packet-network (DPN) to an alternate server-node connected to the network and accessible to the client node.

Japanese patent application publication number JP 2004 171495 A relates to providing a service performance monitoring system enabling the use of an optimum service with further high responsiveness by acquiring, in a performance monitoring/control for a service optionally used by a user, degree information for the failure or reduction in performance of a server or the like.

United States patent application publication number US 2011/320518 A1 relates to providing to mobile devices which employ intelligent agents in combination with a wide array of remote utilities and information sources to facilitate improving a mobile device user's experience.

United States patent application publication number US 2009/111462 A1 relates to a technique for gathering and assessing the quality of a location based service provided to a mobile wireless device via a wireless network, which includes providing location-based service information by referring to a target location of a requested item of interest within a proximity of the present location of the mobile wireless device.

United States patent publication number US 6591382 B1 relates to a method for providing improved performance using TCP/IP protocols over wireless networks that can be implemented entirely within the link layer of a protocol stack.

United States patent application publication number US 2008/256557 A1 relates to a clustered computing environment with application staging, including a plurality of application instances running on at least one computer and operating in a clustered computing environment.

United States patent application publication number US 2011/144911 A1 relates to a method of processing global navigation satellite system (GNSS) data.

United States patent application publication number US 2010/323659 A1 relates to providing a mobile communication unit that employs a propagation algorithm to determine connectivity loss boundaries that define connectivity loss regions based on one or more forward projected position vector paths of the mobile communication unit and connectivity data.

United States patent application publication number US 2009/309711 A1 relates to methods and systems for enabling selection of a theme for implementation on a computing device based on sensor data. The computing device can include a variety of sensors including sensors capable of sensing ambient temperature, light, and sound, as well as geographic position, for example. Data collected by a sensor is used to select a theme correlated to the sensed condition. Data from sensors can also be used to generate customized advertisements that can be displayed on the computing device.

European patent application publication number EP 2,403,186 A1 relates to a mobile telecommunications network that includes a core and a radio access network having radio means for wireless communication with mobile terminals registered with the network, wherein the radio access network includes control means operable to control the use of network resources by the mobile terminals. The control means may include an application programming interface, API, which provides a consistent interface to a multiplicity of applications hosted on the control mean. The control means may be provided at an access node site and/or a gateway site.

United States patent application publication number US 2007/010259 A1 relates to determining a current location and bearing of a wireless transmit/receive unit (WTRU). Next, signal quality measurements of a pre-determined geographic region are taken. This geographic region includes the current location of the WTRU. From these quality measurements, a signal quality profile is generated. The signal quality profile and a directional guidance indicator are then displayed to the user of the WTRU. The display indicates areas of preferred signal quality relative to the current location of the WTRU.

### SOME EXAMPLE EMBODIMENTS

The present invention is defined by the appended independent claims. Certain more specific aspects are defined by the dependent claims.

Therefore, there is a need for an approach for automatic alternation of services (e.g., based on sensor data), for instance, when there is performance degradation of an initial service.

According to one embodiment, a method comprises processing and/or facilitating a processing of sensor data, other data, or a combination thereof to determine or predict one or more conditions that can affect a performance of at least one service of a device. The method also comprises causing, at least in part, an initiation of at least one alternate service at the device. The method further comprises causing, at least in part, a transition from the at least one service to the at least one alternate service based, at least in part, on a determination of at least a degradation of the performance of the at least one service.

According to another embodiment, an apparatus comprises at least one processor, and at least one memory including computer program code for one or more computer programs, the at least one memory and the computer program code configured to, with the at least one processor, cause, at least in part, the apparatus to process and/or facilitate a processing of sensor data, other data, or a combination thereof to determine or predict one or more conditions that can affect a performance of at least one service of a device. The apparatus is also caused to cause, at least in part, an initiation of at least one alternate service at the device. The apparatus is further caused to cause, at least in part, a transition from the at least one service to the at least one alternate service based, at least in part, on a determination of at least a degradation of the performance of the at least one service.

According to another embodiment, a computer-readable storage medium carries one or more sequences of one or more instructions which, when executed by one or more processors, cause, at least in part, an apparatus to process and/or facilitate a processing of sensor data, other data, or a combination thereof to determine or predict one or more conditions that can affect a performance of at least one service of a device. The apparatus is also caused to cause, at least in part, an initiation of at least one alternate service at the device. The apparatus is further caused to cause, at least in part, a transition from the at least one service to the at least one alternate service based, at least in part, on a determination of at least a degradation of the performance of the at least one service.

According to another embodiment, an apparatus comprises means for processing and/or facilitating a processing of sensor data, other data, or a combination thereof to determine or predict one or more conditions that can affect a performance of at least one service of a device. The apparatus also comprises means for causing, at least in part, an initiation of at least one alternate service at the device. The apparatus further comprises means for causing, at least in part, a transition from the at least one service to the at least one alternate service based, at least in part, on a determination of at least a degradation of the performance of the at least one service.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of originally filed claims 1 -10, 21 -30, and 46-48.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing transition to an alternate service based on performance degradation of an initial service, according to one embodiment;
FIG. 2 is a diagram of the components of a service alternation platform, according to one embodiment;
FIGs. 3A-3D are flowcharts of processes for providing transition to an alternate service based on performance degradation of an initial service, according to one embodiment;
FIG. 4 is a diagram of a user interface utilized in the processes of FIGs. 3A-3D, according to various embodiments;
FIG. 5 is a diagram of hardware that can be used to implement an embodiment of the invention;
FIG. 6 is a diagram of a chip set that can be used to implement an embodiment of the invention; and
FIG. 7 is a diagram of a mobile terminal (e.g., handset) that can be used to implement an embodiment of the invention.

### DESCRIPTION OF SOME EMBODIMENTS

Examples of a method, apparatus, and computer program for providing transition to an alternate service based on performance degradation of an initial service are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

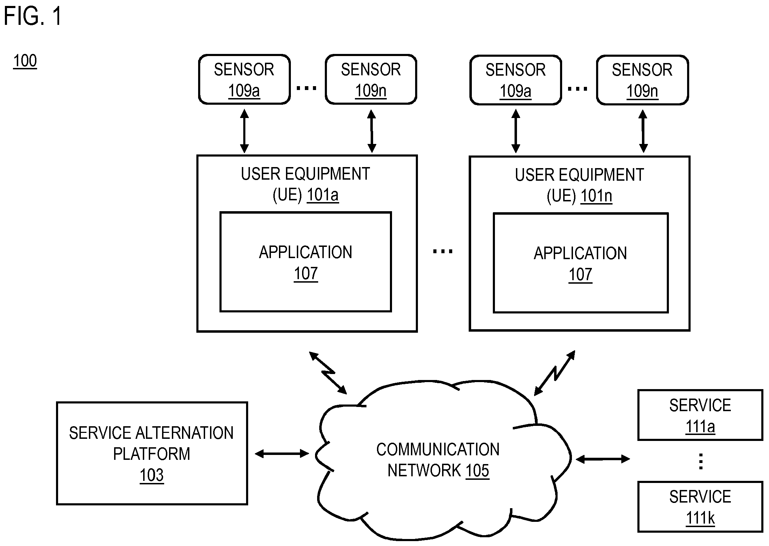

FIG. 1 is a diagram of a system capable of providing transition to an alternate service based on performance degradation of an initial service, according to one embodiment. One of the challenges in providing the network services is maintaining uninterrupted services against obstructive environmental conditions, such as weather conditions, terrain conditions, structural conditions, etc. By way of example, some services (e.g., navigation services, multimedia services, etc.) require data transmission or communication over the wireless network (e.g., GPS, Wi-Fi, cellular, etc.). However, such services can be interrupted or delayed as a result of the obstructive environmental conditions. For example, during rainy conditions, navigation systems or other mobile devices may receive weak signal, and the services can be paused or delayed until the signal is regained. Consequently, service providers and device manufacturers face significant technical challenges in optimizing user experience with respect to accuracy and responsiveness of these services.

To address this problem, a system 100 of FIG. 1 introduces the capability to provide transition from an initial service to an alternate service based, at least in part, on a determination of performance degrade of the initial service. Specifically, the system 100 may process sensor data or other data to determine or predict conditions that can affect performance of a service of a device. The system 100 may further cause an initiation of an alternate service at the device, and cause a transition from a service to an alternate service based, at least in part, on a determination of a degradation of the performance of the service (e.g., that the service is, or will be, experiencing performance degradation based on the sensor data and/or the other data). In some embodiments, the sensor data may include rain sensor data and/or barometric sensor data, and the other data may include weather service information. Moreover, the service and/or the alternative service may relate to location services, and the conditions may include environmental conditions that can affect the location services. In one scenario, for instance, the system 100 process rain sensor data or weather service information to determine rainy weather conditions which may cause the performance of an initial (or default) navigation service running on a device to become degraded. Upon determination of such rainy weather conditions, the system 100 may cause a transition from the initial navigation service to an alternate navigation service, for example, to prevent the user of the device from experiencing degraded performance of the initial navigation service.

As shown in FIG. 1, the system 100 comprises one or more user equipment (UEs) 101 (or UEs 101a-101n) having connectivity to a service alternation platform 103 via a communication network 105. The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, automobile, or any combination thereof, including the accessories and peripherals of these devices, or any combination thereof. It is also contemplated that the UE 101 can support any type of interface to the user (such as "wearable" circuitry, etc.). In addition, as depicted, the UEs 101 may respective include or have access to an application 107 to enable interaction between a UE 101 and the service alternation platform 103.

In some embodiments, one of the UEs 101 may be a mobile phone, while another one of the UEs 101 may be an automobile that includes an On-Board Diagnostics (OBD) sensor interface or system. By way of example, the OBD sensor interface or system may be installed in a car as a standard connecting port. A sensor 109 associated with the OBD sensor interface or system may include a vehicle speed sensor, wheel speed sensor, steering angle sensors, G-Force sensor, air temperature sensor, barometric sensor, oxygen sensor, airflow sensor, etc. The sensor data obtained by the sensor 109 may be transmitted to the service alternation platform 103 directly from the automobile and/or via the mobile phone. In various embodiments, the service alternation platform 103 may also receive information related to environmental conditions (e.g., weather conditions, terrain features, structural features, etc.) from services 111. For example, the service 111 may provide the information related to environmental conditions to the service alternation platform 103 for verification of the environmental conditions determined based on the sensor data.

In certain embodiments, the system 100 may comprise a communication network 105. By way of example, the communication network 105 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

In another embodiment, the service alternation platform 103 may cause a verification of the one or more conditions, and the initiation of the at least one alternate service, the transition from the at least one service to the at least one alternative service, or a combination thereof is based on the verification. By way of example, weather conditions determined by a rain sensor may be verified based on online weather information. Such verification may cause initiation of an alternate navigation service, and transition from an initial navigation service to the alternate navigation service.

In another embodiment, the service alternation platform 103 may cause a verification of the rain sensor data, the barometric sensor data, or a combination thereof based on the weather service information. In one use case, determination of rainy weather conditions by the rain sensor may be verified by the online weather service that provides information with regard to current weather conditions based on location.

In another embodiment, the at least one service may be executing in at least one foreground process of the device. As such, the service alternation platform 103 may cause the initiation of the at least one alternate service as at least one background process of the device, and cause the transition by moving the at least one alternative service from the at least one background process to the at least one foreground process. In one scenario, a default navigation service that is running as a foreground process of a navigation system may be switched with an alternate navigation service already running as a background process of the navigation system, such that the alternate navigation service becomes a foreground process while the default navigation system becomes a background process.

In another embodiment, the service alternation platform 103 may cause a buffering of service data determined via the at least one alternate service, and cause an access of the buffered service data based on the degradation of the performance of the at least one service. By way of example, an alternate navigation service executed in the background process of a navigation system may determine navigation service data required for the alternate navigation service and store the service data into memory storage. Then, upon determination of weak GPS signal transmission, the navigation service data may be accessed by the alternate navigation service.

In another embodiment, the service alternation platform 103 may determine the degradation of the at least one service based on a signal loss, a reduction in a level of accuracy, or a combination thereof. In one use case, performance degradation of a navigation system may be determined by weak or no GPS signal transmission and/or inaccuracy of the navigation service.

In another embodiment, the service alternation platform 103 may determine the sensor data via one or more standardized sensor interface or systems including an On-Board Diagnostics (OBD) sensor interface or system. In one scenario, a car may be installed with the OBD sensor interface or system. Rainy weather condition, speed of the car, direction of the travel, etc., may be determined by sensors associated with OBD system, and such information may be transmitted via OBD sensor interface.

In another embodiment, the service alternation platform 103 may determine the sensor data via one or more sensors associated with the device. By way of example, rainy weather conditions may be determined by a rain sensor, humidity sensor, or optical sensor, and the sensors may be associated with mobile computing devices or an OBD sensor interface or system.

In another embodiment, the other data may include mapping data. As such, the service alternation platform 103 may process the mapping data to determine one or more terrain features that can result in the one or more conditions. In one use case, mountainous terrain conditions surrounding a user's location may be determined by processing mapping data associated with navigation service or system. If, for instance, it is predicted that such terrain conditions will soon cause the performance of a default navigation service (e.g., currently running as a foreground process on the user's navigation device) to become degraded, the service alternation platform 103 may thus cause a switch from the default navigation service to an alternate navigation service.

By way of example, the UEs 101, the service alternation platform 103, and the services 111 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

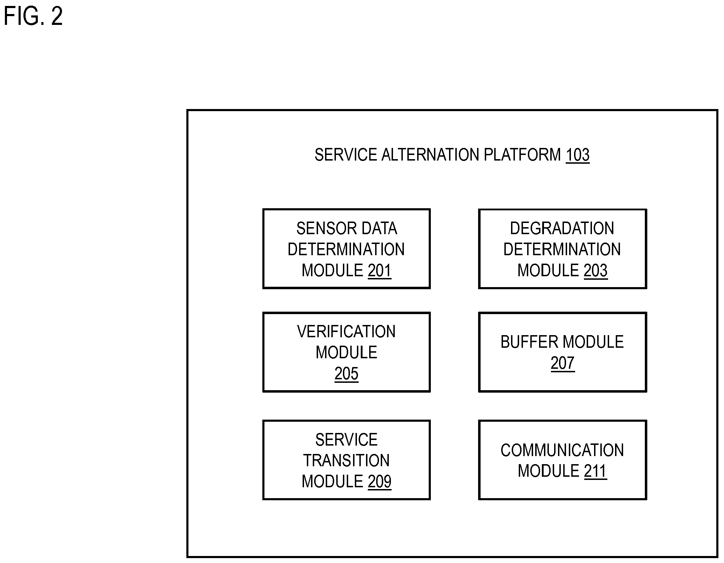

FIG. 2 is a diagram of the components of a service alternation platform, according to one embodiment. By way of example, the service alternation platform 103 includes one or more components for providing transition to an alternate service based on performance degradation of an initial service. It is contemplated that the functions of these components may be combined in one or more components or performed by other components of equivalent functionality. In this embodiment, the service alternation platform 103 includes a sensor data determination module 201, a degradation determination module 203, a verification module 205, a buffer module 207, a service transition module 209, and communication module 211.

In one embodiment, the sensor data determination module 201 may enable determination of sensor data obtained from the sensors. The sensors may, for instance, include barometric sensors, temperature sensors, speed sensors, optical sensors, humidity sensors, rain sensors, etc. In addition, in some embodiments, the sensor data may be collected via one or more standardized sensor interfaces or systems such as an On-Board Diagnostics (OBD) sensor interface or system. The OBD sensor interface may, for example, be installed in vehicles as a standard connecting port. Through the OBD sensor interface, operating parameters of a vehicle and the sensor data may be obtained in real time. The OBD sensors may include vehicle speed sensors, wheel speed sensors, steering angle sensors, G-Force sensors, air temperature sensors, barometric sensors, oxygen sensors, airflow sensors, etc. The sensor data may be obtained through a device connector to the OBD sensor interface. The sensor data may be also collected via one or more sensors associated with the device. The device may include mobile computers, mobile phones, navigation systems, etc. The device may be connected with the one or more sensors including barometric sensors, speed sensors, gyro sensors, compass sensors, light sensors, GPS, etc.

In one embodiment, the degradation determination module 203 may enable determination of degradation of the performance of a service (e.g., an initial/default service). By way of example, the degradation of the performance may be determined based on slow or delayed processing, frequent buffering, discontinuation of service, signal loss, a reduction in a level of accuracy, or a combination thereof. Signal loss may, for instance, include losing data signal transmitted from GPS satellites, Wi-Fi routers, cellular stations, etc., due to obstructive environmental conditions.

In one embodiment, the verification module 205 may enable verification of the one or more conditions. For example, conditions determined based on the sensor data may be verified using the other data, and conditions determined based on the other data may be verified using the sensor data. In one use case, rain sensor data, the barometric sensor data, or a combination thereof may be verified using weather service information.

In one embodiment, the buffer module 207 may enable buffering of service data determined via an alternate service (e.g., that will replace the default service as a foreground process based on performance degradation of the default service). As an example, the buffering of the service data may be a holding of the service data in memory storage until the service data is processed. As such, the buffered service data may be accessed upon determining the degradation of the performance of the default service.

In one embodiment, the service transition module 209 may enable transition from a default service to an alternate service based on a determination of a degradation of the performance of the default service. In one scenario, for instance, the default service may be switched from a foreground process to a background process, and the alternate service may be switched from a background process to a foreground process, based on such a determination.

In one embodiment, the communication module 211 may enable formation of a session over the communication network 105 between the service alternation platform 103 and the UE 101. For example, the communication module 211 executes various protocols and data sharing techniques for enabling collaborative execution between UE 101 and the service alternation platform 103 over the communication network 105.

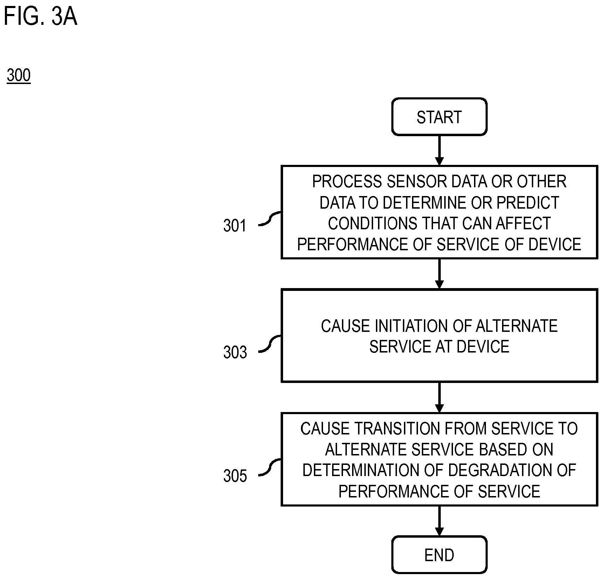

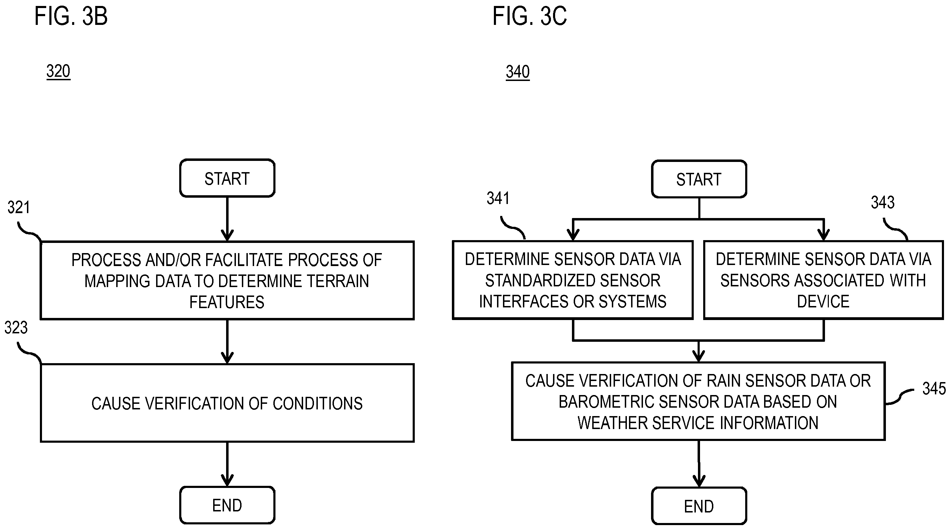

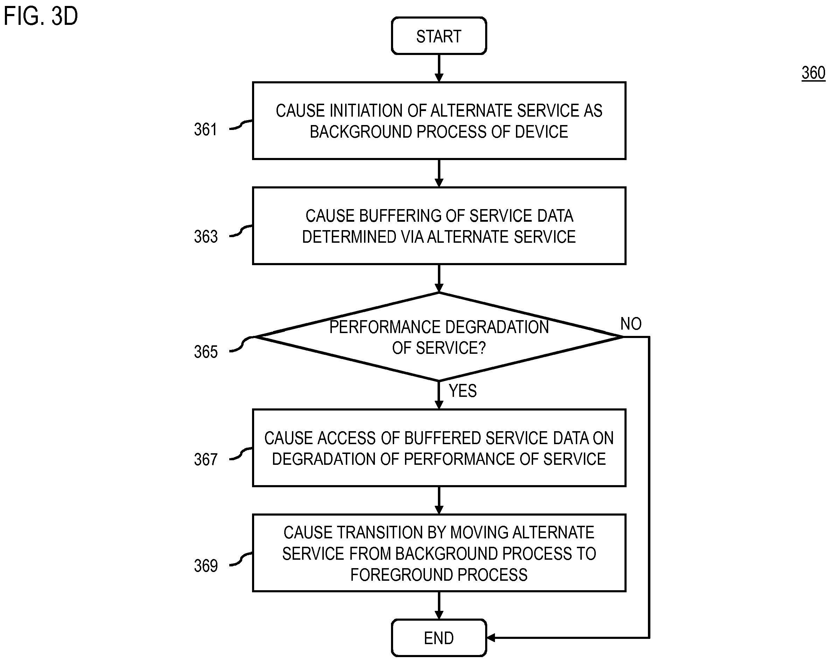

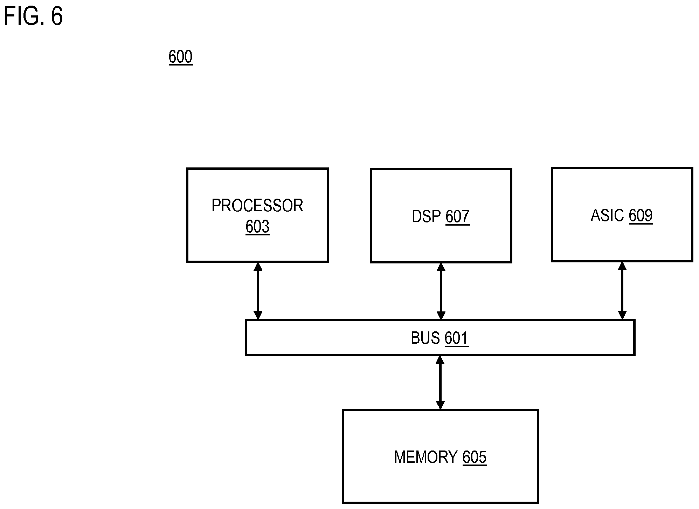

FIG. 3 is a flowchart of a process for providing transition to an alternate service based on performance degradation of an initial service, according to one embodiment. In one embodiment, the service alternation platform 103 performs the process 300, 320, 340, and 360 and is implemented in, for instance, a chip set including a processor and a memory as shown in FIG. 6.

In step 301 of process 300 (FIG. 3A), the service alternation platform 103 may process and/or facilitate a processing of sensor data, other data, or a combination thereof to determine or predict one or more conditions that can affect a performance of at least one service of a device. As discussed, the sensor data may include barometric sensor data, temperature sensor data, speed sensor data, optical sensor data, humidity sensor data, rain sensor data, etc., determined by the sensors. The other data may include weather information, terrain information, structural information, etc., obtained from one or more service providers. The one or more conditions may include weather conditions (e.g., rain, snow, etc.), terrain conditions (e.g., mountains, islands, etc.), structural conditions (e.g., tall buildings, tunnels, etc.), etc. The at least one service of a device may include a navigation service, multimedia service, etc. In one use case, for instance, the conditions may affect the performance of the at least one service of the device by obstructing the signal transmission between the device and the signal source, and causing the at least one service to be paused or delayed while searching for signal from the signal source. For example, it may be determined that an approaching thunderstorm may obstruct signal transmissions between GPS satellites and a user's mobile device that is currently providing navigation services based on the GPS signal. As a result of this determination, the alternate navigation service may be initiated, and the initial navigation service may be switched with the alternate navigation service.

In step 303, the service alternation platform 103 may cause, at least in part, an initiation of at least one alternate service at the device. The at least one alternative service may, for instance, provide a similar service as the at least one service. However, the at least one alternative service may primarily be based on sensor data, while the at least one service may primarily be based on data transmitted via wireless networks (e.g., GPS, cellular, Wi-Fi., etc.). By way of example, route guidance information (e.g., current location, speed, distance, etc.) in an alternate navigation service may be determined based on the sensor data without the use of various wireless signals. Moreover, as indicated, the at least one alternate service may be initiated as a background process of the device.

In step 305, the service alternation platform 103 may cause a transition from the at least one service to the at least one alternate service based, at least in part, on a determination of at least a degradation of the performance of the at least one service. As indicated, the degradation of the performance may include slow or delayed processing, frequent buffering, discontinuation of services, etc. The transition may be caused seamlessly by instantly switching the at least one service with the at least one alternative service. By way of example, upon a determination of weak or no GPS signal transmission, an initial navigation service based on the GPS signal transmission in a foreground process of a device may be switched instantly with an alternate navigation service based on sensor data which has been executed in a background process of the device. In this way, continuation of service may be maintained without interruptions.

In one embodiment, the other data (of step 301) may include, at least in part, mapping data. In step 321 of process 320 (FIG. 3B), the service alternation platform 103 may process and/or facilitate a process of the mapping data to determine one or more terrain features that can result in the one or more conditions. The mapping data may include terrain features, routes, POIs, structures, etc. The one or more terrain features may include open lands, tundra, desert, hills, mountains, forests, swamp, river, ocean, etc. Such terrain features may be the conditions that affect the performance of the at least one service of the device. By way of example, mountainous terrain feature may block or obstruct the wireless signal, thereby delaying the process of the service.

In step 323, the service alternation platform 103 may cause, at least in part, a verification of the one of the one or more conditions. For example, conditions determined based on the sensor data may be verified using the other data, and conditions determined based on the other data may be verified using the sensor data. In one use case, rainy weather conditions that are determined using rain sensor data may be verified using weather service information provided by weather services. Moreover, rainy weather conditions that are determined using weather service information may be verified using rain sensor data. In one embodiment, the initiation of the at least one alternate service (step 303), the transition from the at least one service to the at least one alternate service (step 305), or a combination thereof may be based, at least in part, on the verification. In this way, the environmental conditions may be verified to avoid false alerts about the environmental conditions.

In step 341 of process 340 (FIG. 3C), the service alternation platform 103 may determine the sensor data via one or more standardized sensor interfaces or systems including, at least in part, an On-Board Diagnostics (OBD) sensor interface or system. The OBD sensor interface or system may be installed in vehicles as a standard connecting port. Through the OBD sensor interface or system, operating parameters of a vehicle and the sensor data may be determined in real time. The OBD sensor may include vehicle speed sensors, wheel speed sensors, steering angle sensors, G-Force sensors, air temperature sensors, barometric sensors, oxygen sensors, airflow sensors, etc. The sensor data may be obtained through a device connector connected to the OBD sensor interface or system. By way of example, the navigation system may be connected to the OBD sensor interface or system to receive the sensor data required to process the alternate service of the navigation service in situations where the signals are weak or non-existent.

In step 343, the service alternation platform 103 may determine the sensor data via one or more sensors associated with the device. The device may include mobile computers, mobile phones, navigation systems, etc. The device may be associated with the one or more sensors including barometric sensors, speed sensors, gyro sensors, compass sensors, light sensors, GPS, etc. By way of example, speed of a vehicle may be determined based on the sensor data obtained from the speed sensor installed in a driver's mobile phone.

In step 345, the service alternation platform 103 may cause, at least in part, a verification of the rain sensor data, the barometric sensor data, or a combination thereof based, at least in part, on the weather service information. As mentioned previously, the sensor data (e.g., rain sensor data, barometric sensor data, etc.) may be verified based on the other data (e.g., weather service information). By way of example, the rain sensor data (or the barometric sensor data) may be received from the OBD sensor interface (or system) or the device associated with the rain sensors (or the barometric sensors). The weather service information may be received from the weather services. In this way, the sensor data determined by the standardized sensor system such as the OBD or the user device may be verified based on other information.

In one embodiment, the at least one service may be executed in at least one foreground process of the device. For example, the foreground process may be a process that preempts the use of the processing system. In step 361 of process 360 (FIG. 3D), the service alternation platform 103 may cause, at least in part, the initiation of the at least one alternate service as at least one background process of the device. The background process may, for instance, be a process with low priority that is executed when higher priority programs are not using the processing system. By way of example, the alternate service may be executed when the service is not using the processing system.

In step 363, the service alternation platform 103 may cause, at least in part, a buffering of service data determined via the at least one alternate service. The buffering of the service data may be a holding of the service data in memory storage until the service data is processed. By way of example, the service data may be determined by the alternative service in the background process and may be held in the memory storage until the alternative service transit into the foregoing process and the service data is called to be processed.

In step 365, the service alternation platform 103 may determine whether there is, or will be, performance degradation with respect to the at least one service. If, for instance, it is determined that the performance of the at least one service has become degraded (e.g., based on a signal loss, a reduction in a level of accuracy, etc.), the service alternation platform 103 may at step 367 cause, at least in part, an access of the buffered service data based, at least in part, on the degradation of the performance of the at least one service. In step 369, the service alternation platform 103 may also cause, at least in part, the transition (in step 305) by moving the at least one alternate service from the at least one background process to the at least one foreground process. As mentioned, the signal loss may include losing transmitted data signal due to obstructive environmental conditions. For example, GPS and other wireless signals are often lost in mountainous area or tunnels, as well as in rainy weather. In addition, the level of accuracy with respect to signal data may be reduced when the signal is weak or lost due to missing or interrupted data. Moreover, in certain embodiments, the access of the buffered service data may be based on the switch of the at least one alternate service from the at least one background process to the at least one foreground process. As an example, the switch to the foreground process may enable the buffered service data to be accessed by the alternative service. In this way, the alternate service executed in the background process may be transitioned into the foreground process seamlessly upon a determination that the performance of an initial service is, or will become, degraded.

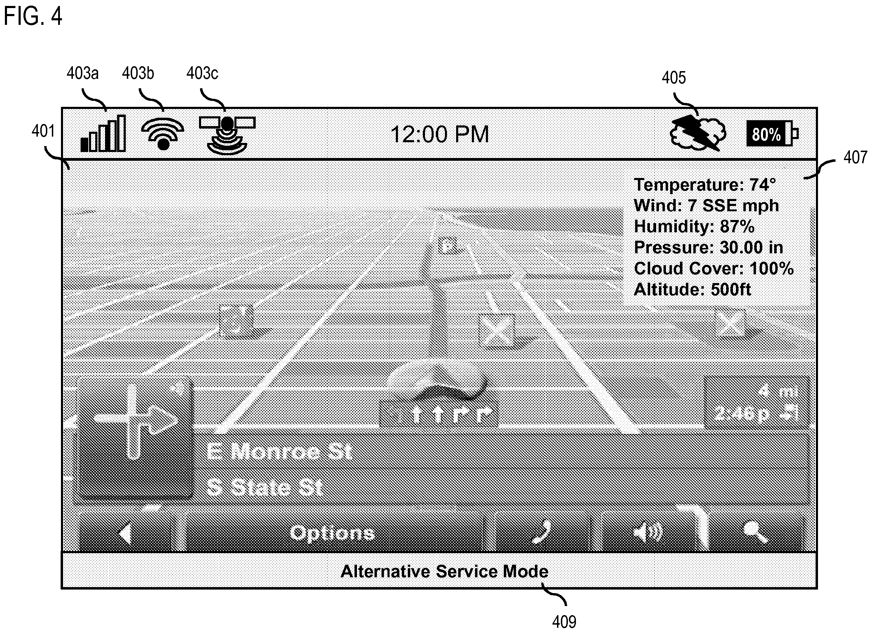

FIG. 4 is a diagram of a user interface that may be utilized in the processes of FIGs. 3A-3D, according to one embodiment. The user interface may include a main service display 401, signal reception indicators 403, a weather indicator 405, environmental information 407, and a transition notification 409. In this scenario, the weather indicator 405 indicates that a thunderstorm is occurring in the vicinity (e.g., based on real-time weather information from a weather service). Moreover, the weather condition may be verified by rain sensor data and barometer data obtained via the OBD system in the user's car. In addition, the signal reception indicators 403 indicate that the cellular signal 403a, wireless signal 403b, and GPS signal 403c are very weak. As such, performance degradation of the navigation service is determined based on the weather condition and the weak signals. Consequently, the device hosting the user interface may cause an automatic transition from the navigation service to an alternative service, for instance, while continuously providing the appearance of the same service on the main service display 401. In this case, the transition notification 409 also notifies the user that the navigation service is currently in the alternate service mode, in which the processes are executed based on the sensor data rather than certain wirelessly transmitted data such as GPS data. Further, the environmental information 407 presents environmental information determined based on the sensor data along with information received from other informational services (e.g., weather service).

The processes described herein for providing transition to an alternate service based on performance degradation of an initial service may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

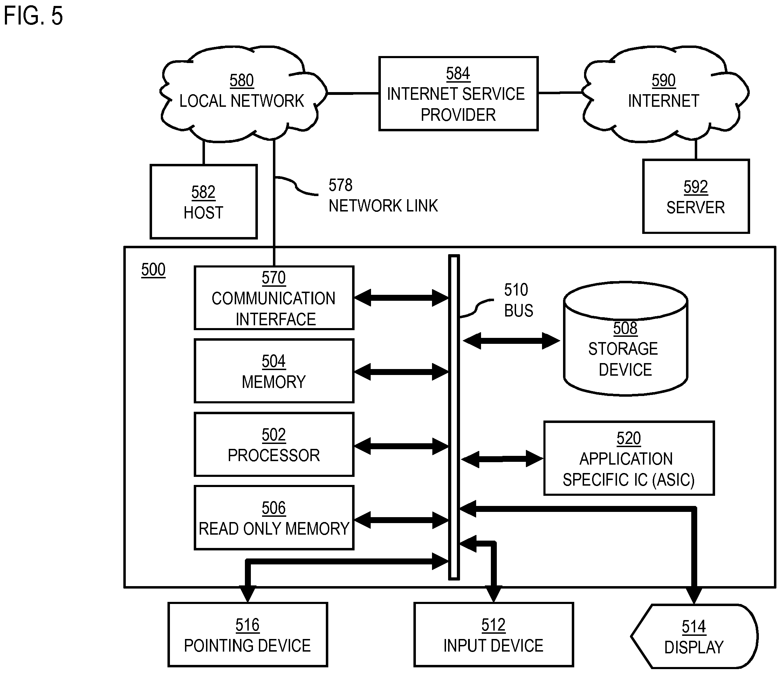

FIG. 5 illustrates a computer system 500 upon which an embodiment of the invention may be implemented. Although computer system 500 is depicted with respect to a particular device or equipment, it is contemplated that other devices or equipment (e.g., network elements, servers, etc.) within FIG. 5 can deploy the illustrated hardware and components of system 500.

Computer system 500 is programmed (e.g., via computer program code or instructions) to provide transition to an alternate service based on performance degradation of an initial service as described herein and includes a communication mechanism such as a bus 510 for passing information between other internal and external components of the computer system 500. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 500, or a portion thereof, constitutes a means for performing one or more steps of providing transition to an alternate service based on performance degradation of an initial service.

A bus 510 includes one or more parallel conductors of information so that information is transferred quickly among devices coupled to the bus 510. One or more processors 502 for processing information are coupled with the bus 510.

A processor (or multiple processors) 502 performs a set of operations on information as specified by computer program code related to providing transition to an alternate service based on performance degradation of an initial service. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 510 and placing information on the bus 510. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 502, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 500 also includes a memory 504 coupled to bus 510. The memory 504, such as a random access memory (RAM) or any other dynamic storage device, stores information including processor instructions for providing transition to an alternate service based on performance degradation of an initial service. Dynamic memory allows information stored therein to be changed by the computer system 500. RAM allows a unit of information stored at a location called a memory address to be stored and retrieved independently of information at neighboring addresses. The memory 504 is also used by the processor 502 to store temporary values during execution of processor instructions. The computer system 500 also includes a read only memory (ROM) 506 or any other static storage device coupled to the bus 510 for storing static information, including instructions, that is not changed by the computer system 500. Some memory is composed of volatile storage that loses the information stored thereon when power is lost. Also coupled to bus 510 is a non-volatile (persistent) storage device 508, such as a magnetic disk, optical disk or flash card, for storing information, including instructions, that persists even when the computer system 500 is turned off or otherwise loses power.

Information, including instructions for providing transition to an alternate service based on performance degradation of an initial service, is provided to the bus 510 for use by the processor from an external input device 512, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 500. Other external devices coupled to bus 510, used primarily for interacting with humans, include a display device 514, such as a cathode ray tube (CRT), a liquid crystal display (LCD), a light emitting diode (LED) display, an organic LED (OLED) display, a plasma screen, or a printer for presenting text or images, and a pointing device 516, such as a mouse, a trackball, cursor direction keys, or a motion sensor, for controlling a position of a small cursor image presented on the display 514 and issuing commands associated with graphical elements presented on the display 514. In some embodiments, for example, in embodiments in which the computer system 500 performs all functions automatically without human input, one or more of external input device 512, display device 514 and pointing device 516 is omitted.

In the illustrated embodiment, special purpose hardware, such as an application specific integrated circuit (ASIC) 520, is coupled to bus 510. The special purpose hardware is configured to perform operations not performed by processor 502 quickly enough for special purposes. Examples of ASICs include graphics accelerator cards for generating images for display 514, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 500 also includes one or more instances of a communications interface 570 coupled to bus 510. Communication interface 570 provides a one-way or two-way communication coupling to a variety of external devices that operate with their own processors, such as printers, scanners and external disks. In general the coupling is with a network link 578 that is connected to a local network 580 to which a variety of external devices with their own processors are connected. For example, communication interface 570 may be a parallel port or a serial port or a universal serial bus (USB) port on a personal computer. In some embodiments, communications interface 570 is an integrated services digital network (ISDN) card or a digital subscriber line (DSL) card or a telephone modem that provides an information communication connection to a corresponding type of telephone line. In some embodiments, a communication interface 570 is a cable modem that converts signals on bus 510 into signals for a communication connection over a coaxial cable or into optical signals for a communication connection over a fiber optic cable. As another example, communications interface 570 may be a local area network (LAN) card to provide a data communication connection to a compatible LAN, such as Ethernet. Wireless links may also be implemented. For wireless links, the communications interface 570 sends or receives or both sends and receives electrical, acoustic or electromagnetic signals, including infrared and optical signals, that carry information streams, such as digital data. For example, in wireless handheld devices, such as mobile telephones like cell phones, the communications interface 570 includes a radio band electromagnetic transmitter and receiver called a radio transceiver. In certain embodiments, the communications interface 570 enables connection to the communication network 105 for providing transition to an alternate service based on performance degradation of an initial service on the UE 101.

The term "computer-readable medium" as used herein refers to any medium that participates in providing information to processor 502, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 508. Volatile media include, for example, dynamic memory 504. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 520.

Network link 578 typically provides information communication using transmission media through one or more networks to other devices that use or process the information. For example, network link 578 may provide a connection through local network 580 to a host computer 582 or to equipment 584 operated by an Internet Service Provider (ISP). ISP equipment 584 in turn provides data communication services through the public, world-wide packet-switching communication network of networks now commonly referred to as the Internet 590.

A computer called a server host 592 connected to the Internet hosts a process that provides a service in response to information received over the Internet. For example, server host 592 hosts a process that provides information representing video data for presentation at display 514. It is contemplated that the components of system 500 can be deployed in various configurations within other computer systems, e.g., host 582 and server 592.

At least some embodiments of the invention are related to the use of computer system 500 for implementing some or all of the techniques described herein. According to one embodiment of the invention, those techniques are performed by computer system 500 in response to processor 502 executing one or more sequences of one or more processor instructions contained in memory 504. Such instructions, also called computer instructions, software and program code, may be read into memory 504 from another computer-readable medium such as storage device 508 or network link 578. Execution of the sequences of instructions contained in memory 504 causes processor 502 to perform one or more of the method steps described herein. In alternative embodiments, hardware, such as ASIC 520, may be used in place of or in combination with software to implement the invention. Thus, embodiments of the invention are not limited to any specific combination of hardware and software, unless otherwise explicitly stated herein.

The signals transmitted over network link 578 and other networks through communications interface 570, carry information to and from computer system 500. Computer system 500 can send and receive information, including program code, through the networks 580, 590 among others, through network link 578 and communications interface 570. In an example using the Internet 590, a server host 592 transmits program code for a particular application, requested by a message sent from computer 500, through Internet 590, ISP equipment 584, local network 580 and communications interface 570. The received code may be executed by processor 502 as it is received, or may be stored in memory 504 or in storage device 508 or any other non-volatile storage for later execution, or both. In this manner, computer system 500 may obtain application program code in the form of signals on a carrier wave.

Various forms of computer readable media may be involved in carrying one or more sequence of instructions or data or both to processor 502 for execution. For example, instructions and data may initially be carried on a magnetic disk of a remote computer such as host 582. The remote computer loads the instructions and data into its dynamic memory and sends the instructions and data over a telephone line using a modem. A modem local to the computer system 500 receives the instructions and data on a telephone line and uses an infra-red transmitter to convert the instructions and data to a signal on an infra-red carrier wave serving as the network link 578. An infrared detector serving as communications interface 570 receives the instructions and data carried in the infrared signal and places information representing the instructions and data onto bus 510. Bus 510 carries the information to memory 504 from which processor 502 retrieves and executes the instructions using some of the data sent with the instructions. The instructions and data received in memory 504 may optionally be stored on storage device 508, either before or after execution by the processor 502.

FIG. 6 illustrates a chip set or chip 600 upon which an embodiment of the invention may be implemented. Chip set 600 is programmed to provide transition to an alternate service based on performance degradation of an initial service as described herein and includes, for instance, the processor and memory components described with respect to FIG. 5 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 600 can be implemented in a single chip. It is further contemplated that in certain embodiments the chip set or chip 600 can be implemented as a single "system on a chip." It is further contemplated that in certain embodiments a separate ASIC would not be used, for example, and that all relevant functions as disclosed herein would be performed by a processor or processors. Chip set or chip 600, or a portion thereof, constitutes a means for performing one or more steps of providing user interface navigation information associated with the availability of functions. Chip set or chip 600, or a portion thereof, constitutes a means for performing one or more steps of providing transition to an alternate service based on performance degradation of an initial service.

In one embodiment, the chip set or chip 600 includes a communication mechanism such as a bus 601 for passing information among the components of the chip set 600. A processor 603 has connectivity to the bus 601 to execute instructions and process information stored in, for example, a memory 605. The processor 603 may include one or more processing cores with each core configured to perform independently. A multi-core processor enables multiprocessing within a single physical package. Examples of a multi-core processor include two, four, eight, or greater numbers of processing cores. Alternatively or in addition, the processor 603 may include one or more microprocessors configured in tandem via the bus 601 to enable independent execution of instructions, pipelining, and multithreading. The processor 603 may also be accompanied with one or more specialized components to perform certain processing functions and tasks such as one or more digital signal processors (DSP) 607, or one or more application-specific integrated circuits (ASIC) 609. A DSP 607 typically is configured to process real-world signals (e.g., sound) in real time independently of the processor 603. Similarly, an ASIC 609 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 600 includes merely one or more processors and some software and/or firmware supporting and/or relating to and/or for the one or more processors.

The processor 603 and accompanying components have connectivity to the memory 605 via the bus 601. The memory 605 includes both dynamic memory (e.g., RAM, magnetic disk, writable optical disk, etc.) and static memory (e.g., ROM, CD-ROM, etc.) for storing executable instructions that when executed perform the inventive steps described herein to provide transition to an alternate service based on performance degradation of an initial service. The memory 605 also stores the data associated with or generated by the execution of the inventive steps.

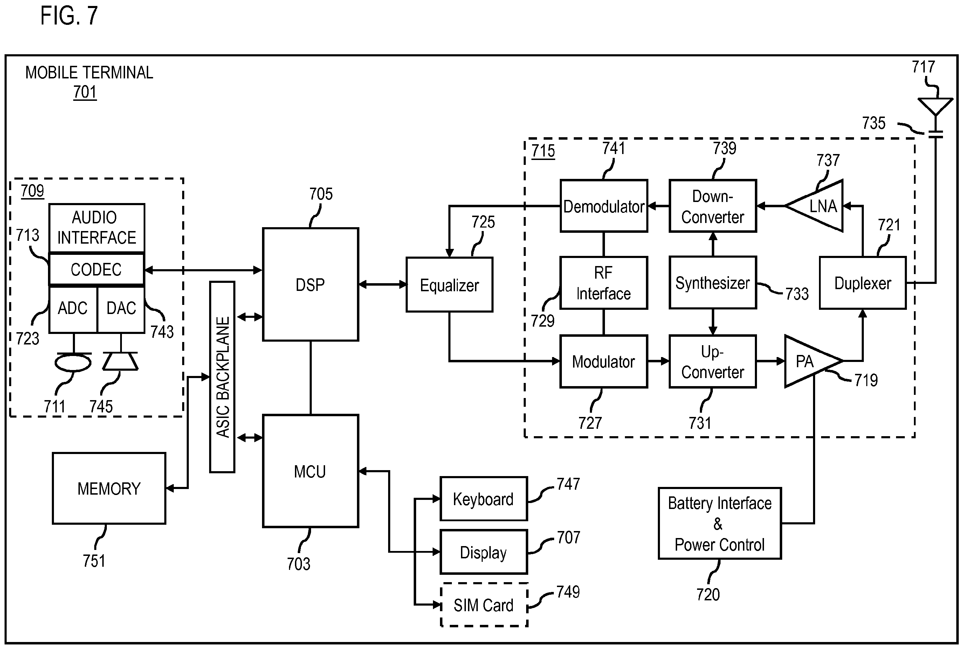

FIG. 7 is a diagram of exemplary components of a mobile terminal (e.g., handset) for communications, which is capable of operating in the system of FIG. 1, according to one embodiment. In some embodiments, mobile terminal 701, or a portion thereof, constitutes a means for performing one or more steps of providing transition to an alternate service based on performance degradation of an initial service. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 703, a Digital Signal Processor (DSP) 705, and a receiver/transmitter unit including a microphone gain control unit and a speaker gain control unit. A main display unit 707 provides a display to the user in support of various applications and mobile terminal functions that perform or support the steps of providing transition to an alternate service based on performance degradation of an initial service. The display 707 includes display circuitry configured to display at least a portion of a user interface of the mobile terminal (e.g., mobile telephone). Additionally, the display 707 and display circuitry are configured to facilitate user control of at least some functions of the mobile terminal. An audio function circuitry 709 includes a microphone 711 and microphone amplifier that amplifies the speech signal output from the microphone 711. The amplified speech signal output from the microphone 711 is fed to a coder/decoder (CODEC) 713.

A radio section 715 amplifies power and converts frequency in order to communicate with a base station, which is included in a mobile communication system, via antenna 717. The power amplifier (PA) 719 and the transmitter/modulation circuitry are operationally responsive to the MCU 703, with an output from the PA 719 coupled to the duplexer 721 or circulator or antenna switch, as known in the art. The PA 719 also couples to a battery interface and power control unit 720.

In use, a user of mobile terminal 701 speaks into the microphone 711 and his or her voice along with any detected background noise is converted into an analog voltage. The analog voltage is then converted into a digital signal through the Analog to Digital Converter (ADC) 723. The control unit 703 routes the digital signal into the DSP 705 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 725 for compensation of any frequency-dependent impairments that occur during transmission though the air such as phase and amplitude distortion. After equalizing the bit stream, the modulator 727 combines the signal with a RF signal generated in the RF interface 729. The modulator 727 generates a sine wave by way of frequency or phase modulation. In order to prepare the signal for transmission, an up-converter 731 combines the sine wave output from the modulator 727 with another sine wave generated by a synthesizer 733 to achieve the desired frequency of transmission. The signal is then sent through a PA 719 to increase the signal to an appropriate power level. In practical systems, the PA 719 acts as a variable gain amplifier whose gain is controlled by the DSP 705 from information received from a network base station. The signal is then filtered within the duplexer 721 and optionally sent to an antenna coupler 735 to match impedances to provide maximum power transfer. Finally, the signal is transmitted via antenna 717 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 701 are received via antenna 717 and immediately amplified by a low noise amplifier (LNA) 737. A down-converter 739 lowers the carrier frequency while the demodulator 741 strips away the RF leaving only a digital bit stream. The signal then goes through the equalizer 725 and is processed by the DSP 705. A Digital to Analog Converter (DAC) 743 converts the signal and the resulting output is transmitted to the user through the speaker 745, all under control of a Main Control Unit (MCU) 703 which can be implemented as a Central Processing Unit (CPU).

The MCU 703 receives various signals including input signals from the keyboard 747. The keyboard 747 and/or the MCU 703 in combination with other user input components (e.g., the microphone 711) comprise a user interface circuitry for managing user input. The MCU 703 runs a user interface software to facilitate user control of at least some functions of the mobile terminal 701 to provide transition to an alternate service based on performance degradation of an initial service. The MCU 703 also delivers a display command and a switch command to the display 707 and to the speech output switching controller, respectively. Further, the MCU 703 exchanges information with the DSP 705 and can access an optionally incorporated SIM card 749 and a memory 751. In addition, the MCU 703 executes various control functions required of the terminal. The DSP 705 may, depending upon the implementation, perform any of a variety of conventional digital processing functions on the voice signals. Additionally, DSP 705 determines the background noise level of the local environment from the signals detected by microphone 711 and sets the gain of microphone 711 to a level selected to compensate for the natural tendency of the user of the mobile terminal 701.

The CODEC 713 includes the ADC 723 and DAC 743. The memory 751 stores various data including call incoming tone data and is capable of storing other data including music data received via, e.g., the global Internet. The software module could reside in RAM memory, flash memory, registers, or any other form of writable storage medium known in the art. The memory device 751 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 749 carries, for instance, important information, such as the cellular phone number, the carrier supplying service, subscription details, and security information. The SIM card 749 serves primarily to identify the mobile terminal 701 on a radio network. The card 749 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising:
at least one processor; and
at least one memory including computer program code for one or more programs,
the at least one memory and the computer program code configured to, with the at least one processor, cause the apparatus to perform at least the following:
process sensor data, other data, or a combination thereof to determine or predict a presence of one or more current environmental conditions that can affect a performance of at least one service of a device;
cause an initiation of at least one alternate service at the device, wherein the at least one alternative service provides a similar service as the at least one service, and wherein the at least one alternative service is primarily based on sensor data while the at least one service is primarily based on data transmitted via wireless networks; and
cause a transition from the at least one service to the at least one alternate service in dependence on a determination of at least a degradation of the performance of the at least one service and the determination or prediction of the presence of the one or more current environmental conditions.

2. An apparatus of claim 1, wherein the apparatus is further caused to:
cause, at least in part, a verification of the presence of the one or more current environmental conditions,
wherein the initiation of the at least one alternate service, the transition from the at least one service to the at least one alternate service, or a combination thereof is based, at least in part, on the verification.

3. A apparatus of claim 1, wherein the sensor data include, at least in part, rain sensor data, barometric sensor data, or a combination thereof; wherein the other data include, at least in part, weather service information; wherein the at least one service, the at least one alternate one service, or a combination thereof relate, at least in part, to one or more location services; and wherein the one or more current environmental conditions include, one or more environmental conditions that can affect the one or more location services.

4. An apparatus of claim 3, wherein the apparatus is further caused to:
cause, at least in part, a verification of the rain sensor data, the barometric sensor data, or a combination thereof based, at least in part, on the weather service information.

5. An apparatus of claim 1, wherein the at least one service is executing in at least one foreground process of the device, the apparatus is further caused to:
cause, at least in part, the initiation of the at least one alternate service as at least one background process of the device; and
cause, at least in part, the transition by moving the at least one alternate service from the at least one background process to the at least one foreground process.

6. An apparatus of claim 1, wherein the apparatus is further caused to:
cause, at least in part, a buffering of service data determined via the at least one alternate service; and
cause, at least in part, an access of the buffered service data based, at least in part, on the degradation of the performance of the at least one service.

7. An apparatus of claim 1, wherein the apparatus is further caused to:
determine the degradation of the at least one service based, at least in part, on a signal loss, a reduction in a level of accuracy, or a combination thereof.

8. An apparatus of claim 1, wherein the apparatus is further caused to:
determine the sensor data via one or more standardized sensor interfaces or systems including, at least in part, an On-Board Diagnostics (OBD) sensor interface or system.

9. An apparatus of claim 1, wherein the apparatus is further caused to:
determine the sensor data via one or more sensors associated with the device.

10. An apparatus of claim 1, wherein the other data include, at least in part, mapping data, and the apparatus is further caused to:
process and/or facilitate a processing of the mapping data to determine one or more terrain features that can result in the presence of the one or more current environmental conditions.

11. A method comprising:
processing and/or facilitating a processing of sensor data, other data, or a combination thereof to determine or predict a presence of one or more current environmental conditions that can affect a performance of at least one service of a device;
an initiation of at least one alternate service at the device, wherein the at least one alternative service provides a similar service as the at least one service, and wherein the at least one alternative service is primarily based on sensor data while the at least one service is primarily based on data transmitted via wireless networks; and
a transition from the at least one service to the at least one alternate service in dependence on a determination of at least a degradation of the performance of the at least one service and on the determination or prediction of the presence of the one or more current environmental conditions.

12. A method of claim 11, further comprising:
a verification of the presence of the one or more current environmental conditions,
wherein the initiation of the at least one alternate service, the transition from the at least one service to the at least one alternate service, or a combination thereof is based, at least in part, on the verification.

13. A method of claim 11, wherein the sensor data include, at least in part, rain sensor data, barometric sensor data, or a combination thereof; wherein the other data include, at least in part, weather service information; wherein the at least one service, the at least one alternate service, or a combination thereof relate, at least in part, to one or more location services; and wherein the one or more current environmental conditions include, one or more environmental conditions that can affect the one or more location services.

14. A method of claim 11, further comprising:
at least one determination of the degradation of the at least one service based, at least in part, on a signal loss, a reduction in a level of accuracy, or a combination thereof.

15. A method of claim 11, further comprising:
a processing of mapping data to determine one or more terrain features that can result in the one or more current environmental conditions.

## Patentansprüche

1. Vorrichtung, umfassend:
mindestens einen Prozessor; und
mindestens einen Speicher, der Computerprogrammcode für ein oder mehrere Programme beinhaltet,
wobei der mindestens eine Speicher und der Computerprogrammcode dafür ausgelegt sind, mit dem mindestens einen Prozessor die Vorrichtung zu veranlassen, zumindest das Folgende auszuführen:
Verarbeiten von Sensordaten, anderen Daten oder einer Kombination davon zum Bestimmen oder Vorhersagen eines Vorhandenseins einer oder mehrerer aktueller Umweltbedingungen, die die Leistung zumindest eines Dienstes einer Vorrichtung beeinflussen können;
Veranlassen einer Einleitung mindestens eines alternativen Dienstes an der Vorrichtung, wobei der mindestens eine alternative Dienst einen ähnlichen Dienst wie der mindestens eine Dienst bereitstellt, und wobei der mindestens eine alternative Dienst primär auf Sensordaten basiert, während der mindestens eine Dienst primär auf Daten basiert, die über Drahtlosnetzwerke übertragen werden; und
Veranlassen eines Übergangs vom mindestens einen Dienst zum mindestens einen alternativen Dienst in Abhängigkeit von der Bestimmung mindestens einer Verschlechterung der Leistung des mindestens einen Dienstes und der Bestimmung oder Vorhersage des Vorhandenseins der einen oder der mehreren aktuellen Umweltbedingungen.

2. Vorrichtung nach Anspruch 1, wobei die Vorrichtung ferner zu Folgendem veranlasst wird:
Veranlassen, zumindest teilweise, einer Überprüfung des Vorhandenseins der einen oder der mehreren aktuellen Umweltbedingungen,
wobei die Einleitung des mindestens einen alternativen Dienstes, der Übergang vom mindestens einen Dienst zum mindestens einen alternativen Dienst oder eine Kombination davon zumindest teilweise auf der Überprüfung basiert.

3. Vorrichtung nach Anspruch 1, wobei die Sensordaten zumindest teilweise Regensensordaten, barometrische Sensordaten oder eine Kombination davon beinhalten; wobei die anderen Daten zumindest teilweise Wetterdienstinformationen beinhalten; wobei der mindestens eine Dienst, der mindestens eine alternative Dienst oder eine Kombination davon sich zumindest teilweise auf einen oder mehrere Ortungsdienste beziehen; und wobei die eine oder die mehreren aktuellen Umweltbedingungen eine oder mehrere Umweltbedingungen beinhalten, die den einen oder die mehreren Ortungsdienste beeinflussen können.

4. Vorrichtung nach Anspruch 3, wobei die Vorrichtung ferner zu Folgendem veranlasst wird:
Veranlassen, zumindest teilweise, einer Überprüfung der Regensensordaten, der barometrischen Sensordaten oder einer Kombination davon, basierend, zumindest teilweise, auf den Wetterdienstinformationen.

5. Vorrichtung nach Anspruch 1, wobei der mindestens eine Dienst in mindestens einem Vordergrundprozess der Vorrichtung ausgeführt wird und die Vorrichtung ferner zu Folgendem veranlasst wird:
Veranlassen, zumindest teilweise, der Einleitung des mindestens einen alternativen Dienstes als mindestens einen Hintergrundprozess der Vorrichtung; und Veranlassen, zumindest teilweise, des Übergangs durch Wechseln des mindestens einen alternativen Dienstes vom mindestens einen Hintergrundprozess in den mindestens einen Vordergrundprozess.

6. Vorrichtung nach Anspruch 1, wobei die Vorrichtung ferner zu Folgendem veranlasst wird:
Veranlassen, zumindest teilweise, einer Pufferung von Dienstdaten, die über den mindestens einen alternativen Dienst bestimmt werden; und
Veranlassen, zumindest teilweise, eines Zugriffs auf die gepufferten Dienstdaten, basierend, zumindest teilweise, auf der Verschlechterung der Leistung des mindestens einen Dienstes.

7. Vorrichtung nach Anspruch 1, wobei die Vorrichtung ferner zu Folgendem veranlasst wird:
Bestimmen der Verschlechterung des mindestens einen Dienstes, basierend, zumindest teilweise, auf einem Signalverlust, einer Verminderung des Genauigkeitsgrades oder einer Kombination davon.

8. Vorrichtung nach Anspruch 1, wobei die Vorrichtung ferner zu Folgendem veranlasst wird:
Bestimmen der Sensordaten über eine oder mehrere standardisierte Sensorschnittstellen oder -systeme, beinhaltend, zumindest teilweise, eine Borddiagnose-(engl. On-Board Diagnostics, OBD)-Sensorschnittstelle oder ein OBD-System.

9. Vorrichtung nach Anspruch 1, wobei die Vorrichtung ferner zu Folgendem veranlasst wird: Bestimmen der Sensordaten über einen oder mehrere Sensoren, die der Vorrichtung zugeordnet sind.

10. Vorrichtung nach Anspruch 1, wobei die anderen Daten, zumindest teilweise, Kartierungsdaten beinhalten und die Vorrichtung ferner zu Folgendem veranlasst wird:
Verarbeiten und/oder Erleichtern einer Verarbeitung der Kartierungsdaten zum Bestimmen eines oder mehrerer Geländemerkmale, die zum Vorhandensein der einen oder der mehreren aktuellen Umweltbedingungen führen können.

11. Verfahren, umfassend:
Verarbeiten und/oder Erleichtern einer Verarbeitung von Sensordaten, anderen Daten oder einer Kombination davon zum Bestimmen oder Vorhersagen eines Vorhandenseins einer oder mehrerer aktueller Umweltbedingungen, die die Leistung zumindest eines Dienstes einer Vorrichtung beeinflussen können;
eine Einleitung mindestens eines alternativen Dienstes an der Vorrichtung, wobei der mindestens eine alternative Dienst einen ähnlichen Dienst wie der mindestens eine Dienst bereitstellt, und wobei der mindestens eine alternative Dienst primär auf Sensordaten basiert, während der mindestens eine Dienst primär auf Daten basiert, die über Drahtlosnetzwerke übertragen werden; und
einen Übergang vom mindestens einen Dienst zum mindestens einen alternativen Dienst in Abhängigkeit von der Bestimmung zumindest einer Verschlechterung der Leistung des mindestens einen Dienstes und der Bestimmung oder Vorhersage des Vorhandenseins der einen oder der mehreren aktuellen Umweltbedingungen.

12. Verfahren nach Anspruch 11, ferner umfassend:
eine Überprüfung des Vorhandenseins der einen oder der mehreren aktuellen Umweltbedingungen,
wobei die Einleitung des mindestens einen alternativen Dienstes, der Übergang vom mindestens einen Dienst zum mindestens einen alternativen Dienst oder eine Kombination davon zumindest teilweise auf der Überprüfung basiert.

13. Verfahren nach Anspruch 11, wobei die Sensordaten zumindest teilweise Regensensordaten, barometrische Sensordaten oder Kombination davon beinhalten; wobei die anderen Daten zumindest teilweise Wetterdienstinformationen beinhalten; wobei der mindestens eine Dienst, der mindestens eine alternative Dienst oder eine Kombination davon sich zumindest teilweise auf einen oder mehrere Ortungsdienste beziehen; und wobei die eine oder die mehreren aktuellen Umweltbedingungen eine oder mehrere Umweltbedingungen beinhalten, die den einen oder die mehreren Ortungsdienste beeinflussen können.

14. Verfahren nach Anspruch 11, ferner umfassend:
zumindest eine Bestimmung der Verschlechterung des mindestens einen Dienstes, basierend, zumindest teilweise, auf einem Signalverlust, einer Verminderung des Genauigkeitsgrades oder einer Kombination davon.

15. Verfahren nach Anspruch 11, ferner umfassend:
eine Verarbeitung von Kartierungsdaten zum Bestimmen eines oder mehrerer Geländemerkmale, die zum Vorhandensein der einen oder der mehreren aktuellen Umweltbedingungen führen können.

## Revendications

1. Appareil comprenant :
au moins un processeur ; et
au moins une mémoire comportant un code de programme informatique pour un ou plusieurs programmes,
ladite mémoire et le code de programme informatique étant configurés pour amener, avec ledit processeur, l'appareil à exécuter au moins les actions suivantes :
le traitement de données de capteur, d'autres données, ou d'une combinaison de celles-ci pour déterminer ou prédire une présence d'une ou plusieurs conditions environnementales courantes qui peuvent affecter des performances d'au moins un service d'un dispositif ;
le déclenchement d'une initiation d'au moins un service alternatif au niveau du dispositif, ledit service alternatif fournissant un service similaire à celui dudit service, et ledit service alternatif étant basé essentiellement sur des données de capteur alors que ledit service est basé principalement sur des données transmises par le biais de réseaux sans fil ; et
le déclenchement d'une transition depuis ledit service vers ledit service alternatif en fonction d'une détermination d'au moins une dégradation des performances dudit service et de la détermination ou de la prédiction de la présence des une ou plusieurs conditions environnementales courantes.

2. Appareil selon la revendication 1, dans lequel l'appareil est en outre amené :
au déclenchement, au moins en partie, d'une vérification de la présence des une ou plusieurs conditions environnementales courantes,
l'initiation dudit service alternatif, la transition depuis ledit service vers ledit service alternatif, ou une combinaison des deux étant basées, au moins en partie, sur la vérification.

3. Appareil selon la revendication 1, dans lequel les données de capteur comprennent, au moins en partie, des données de capteur de pluie, des données de capteur barométrique, ou une combinaison de celles-ci ; les autres données comportant, au moins en partie, des informations de service météorologique ; ledit service, ledit service alternatif, ou une combinaison des deux concernant, au moins en partie, un ou plusieurs services de localisation ; et les une ou plusieurs conditions environnementales courantes comportant une ou plusieurs conditions environnementales qui peuvent affecter les un ou plusieurs services de localisation.

4. Appareil selon la revendication 3, dans lequel l'appareil est en outre amené :
au déclenchement, au moins en partie, d'une vérification des données de capteur de pluie, des données de capteur barométrique, ou d'une combinaison de celles-ci sur la base, au moins en partie, des informations de service météorologique.

5. Appareil selon la revendication 1, dans lequel ledit service s'exécute dans au moins un processus d'avant-plan du dispositif, l'appareil étant en outre amené :
au déclenchement, au moins en partie, de l'initiation dudit service alternatif comme au moins un processus d'arrière-plan du dispositif ; et
au déclenchement, au moins en partie, de la transition en faisant passer ledit service alternatif depuis ledit processus d'arrière-plan vers ledit processus d'avant-plan.

6. Appareil selon la revendication 1, dans lequel l'appareil est en outre amené :
au déclenchement, au moins en partie, d'une mise en mémoire tampon de données de service déterminées par le biais dudit service alternatif ; et
au déclenchement, au moins en partie, d'un accès des données de service mises en mémoire tampon sur la base, au moins en partie, de la dégradation des performances dudit service.

7. Appareil selon la revendication 1, dans lequel l'appareil est en outre amené :
à la détermination de la dégradation dudit service sur la base, au moins en partie, d'une perte de signal, d'une réduction d'un niveau de précision, ou d'une combinaison des deux.

8. Appareil selon la revendication 1, dans lequel l'appareil est en outre amené :
à la détermination des données de capteur par le biais d'une ou plusieurs interfaces ou d'un ou plusieurs systèmes de capteur standardisés comportant, au moins en partie, une interface ou un système de capteur de diagnostic embarqué (OBD).

9. Appareil selon la revendication 1, dans lequel l'appareil est en outre amené :
à la détermination des données de capteur par le biais d'un ou plusieurs capteurs associés au dispositif.

10. Appareil selon la revendication 1, dans lequel les autres données comprennent, au moins en partie, des données de mappage, et l'appareil est en outre amené :
au traitement et/ou à la facilitation d'un traitement des données de mappage pour déterminer une ou plusieurs caractéristiques de terrain qui peuvent avoir pour résultat la présence des une ou plusieurs conditions environnementales courantes.

11. Procédé comprenant :
le traitement et/ou la facilitation d'un traitement de données de capteur, d'autres données, ou d'une combinaison de celles-ci pour déterminer ou prédire une présence d'une ou plusieurs conditions environnementales courantes qui peuvent affecter des performances d'au moins un service d'un dispositif ;
une initiation d'au moins un service alternatif au niveau du dispositif, ledit service alternatif fournissant un service similaire à celui dudit service, et ledit service alternatif étant basé essentiellement sur des données de capteur alors que ledit service est basé principalement sur des données transmises par le biais de réseaux sans fil ; et
une transition depuis ledit service vers ledit service alternatif en fonction d'une détermination d'au moins une dégradation des performances dudit service et de la détermination ou de la prédication de la présence des une ou plusieurs conditions environnementales courantes.

12. Procédé selon la revendication 11, comprenant en outre :
une vérification de la présence des une ou plusieurs conditions environnementales courantes,
l'initiation dudit service alternatif, la transition depuis ledit service vers ledit service alternatif, ou une combinaison des deux étant basées, au moins en partie, sur la vérification.

13. Procédé selon la revendication 11, dans lequel les données de capteur comprennent, au moins en partie, des données de capteur de pluie, des données de capteur barométrique, ou une combinaison de celles-ci ; les autres données comportant, au moins en partie, des informations de service météorologique ; ledit service, ledit service alternatif, ou une combinaison des deux concernant, au moins en partie, un ou plusieurs services de localisation ; et les une ou plusieurs conditions environnementales courantes comportant une ou plusieurs conditions environnementales qui peuvent affecter les un ou plusieurs services de localisation.

14. Procédé selon la revendication 11, comprenant en outre :
au moins une détermination de la dégradation dudit service sur la base, au moins en partie, d'une perte de signal, d'une réduction d'un niveau de précision, ou d'une combinaison des deux.

15. Procédé selon la revendication 11, comprenant en outre :
un traitement de données de mappage pour déterminer une ou plusieurs caractéristiques de terrain qui peuvent avoir pour résultat les une ou plusieurs conditions environnementales courantes.
